# FASCICULE DE BREVET EUROPEEN

(11) **EP 0 554 201 B1**
(45) Date de publication et mention de la délivrance du brevet: **21.08.1996**
(21) Numéro de dépôt: 93440010.2
(22) Date de dépôt: 26.01.1993
(51) Int. Cl.: F16B 35/06, F16B 5/02

(54) **Pièce d'attache autobloquante et dispositif de fixation comportant ladite pièce d'attache**
Selbstverriegelndes Klemmelement und dazugehörende Befestigungsvorrichtung für dieses Klemmelement
Self blocking fastening element and fixing device including such an element

(30) Priorité: 29.01.1992 FR 9201148
(43) Date de publication de la demande: 04.08.1993
(73) Titulaire: SOPREMA S.A., 67100 Strasbourg (FR)
(72) Inventeur: Geisen, Pierre, F-67000 Strasbourg (FR); Liebtag, André Robert, F-57117 Noisseville (FR)
(74) Mandataire: Nuss, Pierre

(56) Documents cités:
- AU-A- 3 660 971
- DE-U- 8 605 215
- GB-A- 12 318
- US-A- 3 524 666

## Description

La présente invention concerne la fixation d'éléments et/ou de pièces sur des supports ou des éléments porteurs minces sous forme de profilés nervurés, généralement réalisés en tôle d'acier et appelés "bacs acier", et a pour objet une pièce d'attache autobloquante destinée à être mise en place sur un support de ce type et un dispositif de fixation de panneaux d'isolation comportant ladite pièce d'attache (US-A-3 524 666).

Actuellement, la solidarisation d'éléments ou de pièces sur des supports du genre décrit ci-dessus s'effectue généralement au moyen de vis, auto-perceuses ou coopérant avec des écrous adaptés, constituant des points d'ancrage très localisés sur un support relativement mince, ne pouvant résister individuellement à des efforts de traction ou d'arrachement élevés.

Il en résulte qu'en vue d'obtenir une fixation présentant une résistance suffisante, il est nécessaire soit d'utiliser un très grand nombre de vis solidaires du support profilé, soit d'enficher lesdites vis, en nombre plus réduit mais de taille plus importante, dans les éléments de charpente sous-jacents, en intercalant généralement des. accessoires de fixation complexes et coûteux.

Le problème posé à la présente invention consiste à concevoir un moyen de fixation pour des éléments et/ou des pièces sur un support ou sur des éléments porteurs du type en tôle nervurée, permettant d'obtenir une très grande résistance à l'arrachement au niveau de chaque point de fixation, sans nécessiter d'implantation dans les éléments de charpente soutenant lesdits éléments porteurs, ni l'utilisation d'accessoires de fixation supplémentaires.

En outre, ledit moyen de fixation devra être d'une utilisation rapide et aisée, n'entraînant pas d'opérations de perçage, de vissage ou de boulonnage pour sa mise en place sur les chantiers et ne nécessitant aucun élément séparé supplémentaire, ni aucun outil pour sa solidarisation avec le support ou les éléments porteurs en tôle nervurée.

De plus, ledit moyen de fixation devra permettre de réaliser un dispositif de solidarisation de panneaux d'isolation et d'une couche d'étanchéité sur des éléments porteurs, présentant une résistance à l'arrachement très élevée, tout en mettant en oeuvre un nombre réduit d'éléments de fixation séparés.

Ce problème est précisément résolu grâce à la pièce d'attache correspondante aux caracteristiques de la revendication 1.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
les figures 1A à 1C représentent respectivement des vues en élévation frontale, en plan, et en élévat-ion latérale de la pièce d'attache conforme à l'invention ;
la figure 2 est une vue en plan de la pièce d'attache représentée à la figure 1A après son montage sur un élément porteur nervuré ;
la figure 3 est une vue en élévation latérale de la pièce d'attache représentée à la figure 1A en cours de montage sur un élément porteur nervuré, et,
la figure 4 est une vue en coupe montrant la mise en oeuvre d'un dispositif de fixation de panneaux d'isolation sur des éléments porteurs, comprenant la pièce d'attache représentée aux figures 1A à 1C.

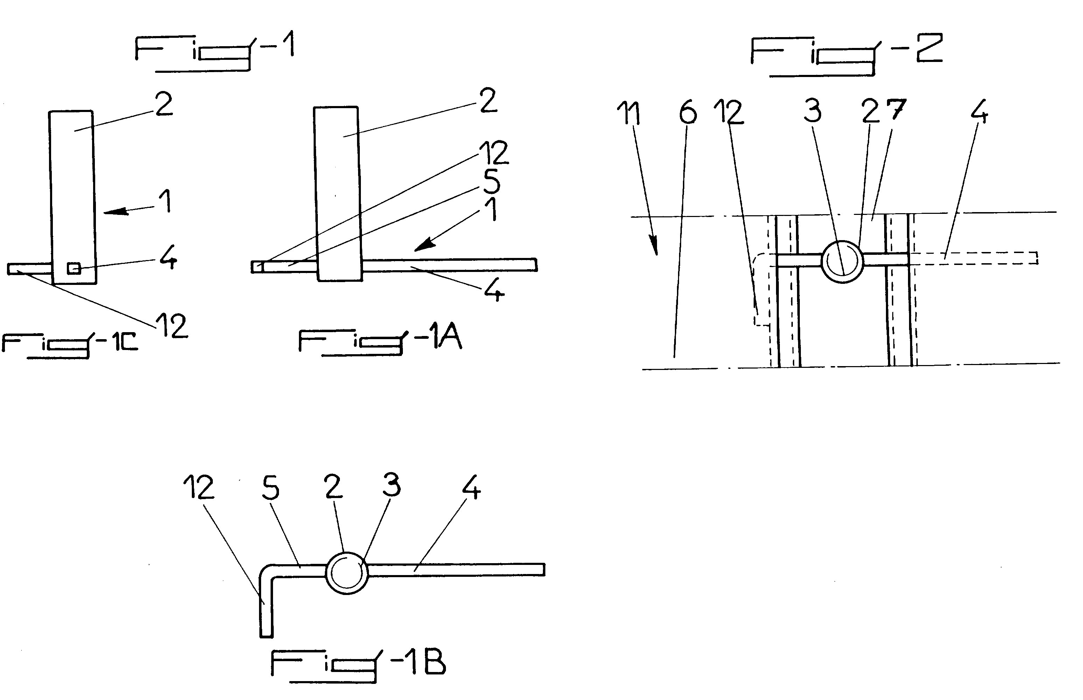

Conformément à l'invention, et comme le montrent notamment les figures 1A à 1C, la pièce d'attache 1 est principalement constituée, d'une part, par un corps tubulaire 2 pourvu de moyens de liaison 3 et, d'autre part, par un élément d'ancrage 4, 5 rapporté sur l'une des extrémités dudit corps tubulaire 2 et s'étendant perpendiculairement par rapport à ce dernier, ledit élément d'ancrage étant composé d'une portion de tige rectiligne 4 et d'une portion de tige coudée 5, en forme de L, disposées de part et d'autre dudit corps tubulaire 2.

Le corps tubulaire 2 pourra présenter des sections, pleines ou non, de formes variées, à savoir, carrées, circulaires ou autres, de même que les portions de tiges constituant l'élément d'ancrage 4, 5, leurs dimensions ainsi que leurs matériaux constitutifs, métalliques et/ou synthétiques, dépendant des conditions de mise en oeuvre ainsi que de la résistance souhaitée.

Néanmoins, l'élément d'ancrage 4, 5 présentera avantageusement une section carrée, pleine ou creuse.

L'élément d'ancrage 4, 5 pourra être réalisé soit en deux portions de tige 4 et 5 indépendantes, soit en deux portions de tige 4 et 5 d'un seul tenant, traversant le corps tubulaire 2 au niveau d'une perforation correspondante, l'assujetissement desdites portions de tige 4 et 5 audit corps tubulaire 2 étant avantageusement obtenu par soudure.

Le corps tubulaire 2 pourra constituer un élément d'assemblage mâle ou femelle pour les éléments et/ou les pièces à fixer comportant des moyens de liaison adaptés coopérant avec les moyens de liaison 3 dudit corps tubulaire 2.

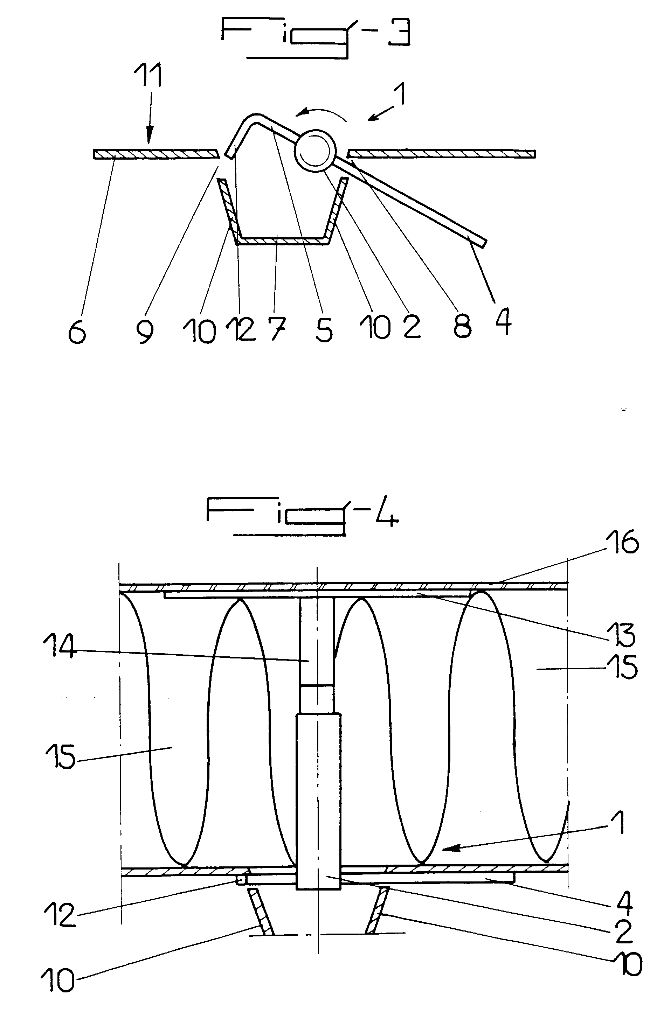

Lesdits moyens de liaison 3 sont avantageusement disposés au niveau de l'extrémité du corps tubulaire 2 opposée à l'élément d'ancrage 4, 5 et peuvent se présenter, par exemple, sous la forme d'un filetage intérieur (voir figures 1B, 2 et 3) ou extérieur, d'un dispositif d'encliquetage, d'un élément emboîtable mâle ou femelle muni de moyens de retenue ou similaires.

Le montage de la pièce d'attache 1 sur les éléments porteurs 6 nervurés s'effectue au niveau des rainures 7 desdits éléments porteurs 6 par introductions successives de la portion de tige rectiligne 4 et de la portion de tige coudée 5 dans des orifices alignés 8, 9 correspondant, réalisés préalablement dans les parois latérales 10 délimitant les rainures 7, à proximité immédiate de la surface support 11 des éléments porteurs 6.

Cette opération de montage consiste, plus précisément, à introduire tout d'abord partiellement la portion de tige rectiligne 4 dans l'un des deux orifices 8 ou 9 existant dans les parois latérales 10 de la rainure 7 concernée, puis à introduire entièrement l'extrémité libre 12 de la portion de tige coudée 5 dans l'orifice opposé 9 ou 8 (voir figure 3) et, enfin, à redresser la pièce d'attache 1 par pivotement jusqu'à ce que l'extrémité libre 12 de la portion de tige coudée 5 bute contre la face interne de la portion de paroi de l'élément porteur 6 définissant la surface support 11.

Lorsque l'extrémité libre 12 est disposée dans le plan perpendiculaire au corps tubulaire 2 contenant la portion de tige rectiligne 4 et la partie de la portion de tige coudée 5 proximale du corps tubulaire 2, ledit corps tubulaire 2 s'étendra perpendiculairement par rapport aux éléments porteurs 6 après pivotement complet de la pièce d'attache 1, ce dernier étant limité par ladite extrémité libre 12.

Dans le cas où des efforts de traction et d'arrachement sont exercés sur le corps tubulaire 2 d'une pièce d'attache 1 montée comme décrit ci-dessous, l'élément d'ancrage 4, 5 prendra appui sur les portions de paroi des éléments porteurs 6 définissant la surface support 11, au niveau de l'extrémité libre 12 et de la partie de la portion de tige rectiligne 4 introduite dans l'orifice 8, 9 correspondant (voir figure 4). Il en résulte une répartition desdits efforts sur une surface importante de la paroi des éléments porteurs 6, notamment dans le cas de portions de tige 4, 5 de section carrée, et, par conséquent, l'intensité des efforts de traction applicables à la pièce d'attache 1 conforme à l'invention, sans occasionner de rupture de la paroi des éléments porteurs 6, ni entraîner l'arrachement ou la destruction de ladite pièce d'attache 1, est nettement supérieure à celle des efforts pouvant être supportés par les moyens de fixation connus actuellement et évoqués précédemment.

La pièce d'attache 1 pourra, en fonction des éléments et/ou des pièces à fixer, être mise en oeuvre soit sur la face supérieure des éléments porteurs 6, pour la solidarisation d'éléments et/ou de pièces reposant sur lesdits éléments porteurs 6, soit au niveau de la face inférieure de ce dernier en vue de l'accrochage ou de la suspension d'éléments et/ou de pièces s'étendant vers l'intérieur de l'espace recouvert par lesdits éléments porteurs 6.

La présente invention a également, pour objet, un dispositif de fixation de panneaux d'isolation 15 et d'un revêtement d'étanchéité 16, représenté à la figure 4 des dessins annexés, ledit dispositif de fixation étant principalement constitué, d'une part, d'une embase 1 solidaire des supports ou des éléments éléments porteurs 6, se présentant sous la forme d'une pièce d'attache 1 décrite ci-dessus, et, d'autre part, par un élément supérieur 13 en forme de plaque muni d'un moyen 14 de liaison avec ladite embase 1 et de réglage de sa distance par rapport aux supports ou aux éléments porteurs 6 (figure 4).

Le moyen 14 de liaison peut avantageusement se présenter sous la forme d'une tige filetée pouvant coopérer avec un orifice taraudé 3 réalisé dans la partie supérieure du corps tubulaire 2 faisant partie de la pièce d'attache 1.

Par ailleurs, l'élément 13 présentera préférentiellement une forme discoïdale, pleine ou munie de découpes périphériques convexes, comportant, le cas échéant, au moins un orifice traversant, facilitant la manoeuvre dudit élément 13 lors de sa mise en place sur la pièce d'attache 1.

L'élément 13 discoïdal présentera avantageusement un diamètre compris entre environ 15 cm et 20 cm selon la résistance à l'arrachement recherchée, laquelle dépend également directement du nombre de dispositifs de fixation par unité de surface.

Comme le montre la figure 4 des dessins annexés, la fixation des panneaux d'isolation 15 sur les éléments porteurs 6 consiste tout d'abord à placer lesdits panneaux d'isolation 15 sur les éléments porteurs 6 et à mettre en place au fur et à mesure les pièces d'attache 1 en les positionnant verticalement, puis à assembler les éléments 13 en forme de plaques auxdites pièces d'attache 1, par vissage à effort contrôlé, de manière à plaquer les panneaux d'isolation 15 contre les éléments porteurs 6, jusqu'à ce que la face supérieure desdits éléments 13 en forme de plaques soient de niveau avec la face supérieure des panneaux d'isolation 15 adjacents, l'ensemble constituant ainsi une surface plane uniforme, sans renfoncement, permettant d'effectuer un collage uniforme et continu du revêtement d'étanchéité superficiel 16.

Ainsi, grâce à l'invention, il est possible de réaliser une pièce d'attache 1 autobloquante pouvant être fixée de manière rapide et aisée sur des éléments porteurs 6 du type en tôle nervurée préalablement perforés, sans utiliser d'outils de montage, et présentant une très grande résistance à l'arrachement après mise en place.

En outre, il est également possible de réaliser un dispositif de fixation de panneaux d'isolation 15 et d'un revêtement d'étanchéité 16, notamment sur des éléments porteurs 6, comportant notamment ladite pièce d'attache 1. La mise en oeuvre du dispositif de fixation précité ne nécessite qu'un nombre restreint de points d'ancrage par unité de surface, tout en permettant d'obtenir une solidarisation présentant une résistance très élevée aux efforts de traction et d'arrachement.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Pièce d'attache destinée à être montée sur des supports ou des éléments porteurs du type en tôle nervurée et principalement constituée par un corps tubulaire (2) et par un élément d'ancrage (4, 5) rapporté sur l'une des extrémités dudit corps tubulaire (2) et s'étendant perpendiculairement par rapport à ce dernier, ledit élément d'ancrage étant composé d'une portion de tige rectiligne (4) et d'une portion de tige coudée (5), en forme de L, disposées de part et d'autre dudit corps tubulaire (2), caractérisé en ce que le corps tubulaire (2) est pourvu de moyens de liaison (3) disposés au niveau de son extrémité opposée à l'élément d'ancrage (4, 5) et en ce que l'élément d'ancrage (4, 5) est assujetti audit corps tubulaire (2) avant montage, ce dernier s'effectuant par introductions successives de la portion de tige rectiligne (4) et de la portion de tige coudée (5) dans des orifices alignés (8, 9) réalisés préalablement dans les parois latérales (10) délimitant les rainures (7) des éléments porteurs (6), à proximité immédiate de la surface support (11) de ces derniers.

2. Pièce d'attache, selon la revendication 1, caractérisée en ce que les moyens de liaison (3) se présentent sous la forme d'un filetage intérieur ou extérieur, d'un dispositif d'encliquetage, d'un élément emboîtable mâle ou femelle muni de moyens de retenue ou similaire.

3. Pièce d'attache, selon l'une quelconque des revendications 1 et 2, caractérisée en ce que l'élément d'ancrage (4, 5) présentera avantageusement une section carrée, pleine ou creuse.

4. Dispositif de fixation de panneaux d'isolation et d'un revêtement d'étanchéité sur des supports ou des éléments porteurs en tôle nervurée, caractérisé en ce qu'il est principalement constitué, d'une part, d'une embase (1) solidaire des supports ou des éléments porteurs (6), se présentant sous la forme de la pièce d'attache (1) selon la revendication 1, et, d'autre part, par un élément supérieur (13) en forme de plaque muni d'un moyen (14) de liaison avec ladite embase (1) et de réglage de sa dispar rapport aux supports ou aux éléments porteurs (6).

5. Dispositif de fixation, selon la revendication 4, caractérisé en ce que le moyen (14) de liaison et de réglage se présente sous la forme d'une tige filetée, pouvant coopérer avec un orifice taraudé (3) réalisé dans la partie supérieure du corps tubulaire (2) de l'embase (1).

6. Dispositif de fixation, selon l'une quelconque des revendications 4 et 5, caractérisé en ce que l'élément supérieur (13) présente une forme discoïdale, pleine ou munie de découpes périphériques convexes, comportant, le cas échéant, au moins un orifice traversant, facilitant la manoeuvre dudit élément (13) lors de sa mise en place sur la pièce d'attache (1).

## Patentansprüche

1. Auf Trägern oder Trägerelementen aus geripptem Blech montierbares Halterungsstück, das im wesentlichen aufgebaut ist aus einem rohrförmigen Körper (2) und einem Verankerungselement (4, 5), das auf einem der Enden des rohrförmigen Körpers (2) aufgesetzt ist und sich senkrecht zu letztgenanntem erstreckt, welches Verankerungselement einesteils aus einer geraden Stange (4) und andernteils aus einer L-förmig abgewinkelten Stange (5) besteht, die beidseits des rohrförmigen Körpers (2) angeordnet sind, dadurch gekennzeichnet, daß der rohrförmige Körper (2) mit Verbindungsmitteln (3) versehen ist, die im Bereich seines, dem Verankerungselement (4, 5) gegenüberliegenden Endes angeordnet sind und daß das Verankerungselement (4, 5) mit dem rohrförmigen Körper (2) vor der Montage verbunden wird, welch letztere durch aufeinanderfolgendes Einführen des Teiles der geraden Stange (4) und des Teils der abgewinkelten Stange (5) in fluchtende Öffnungen (8, 9) erfolgt, die zuvor in Seitenwänden (10), die die Sicken (7) der Trägerelemente (6) begrenzen, in unmittelbarer Nähe der Stützfläche (11) der letzteren vorgesehen werden.

2. Halterungsstück nach Anspruch 1, dadurch gekennzeichnet, daß die Verbindungsmittel (3) in Form eines Innen- und Außengewindes, einer Rastvorrichtung, eines mit Rückhaltemitteln versehenen Feder und Nut - Elementes oder dergleichen vorliegen.

3. Halterungsstück nach einem der Ansprüche 1 und 2, dadurch gekennzeichnet, daß das Verankerungselement (4, 5) vorzugsweise einen viereckigen, vollen oder hohlen Querschnitt aufweist.

4. Befestigungvorrichtung für Isolierplatten und einer Dichtungslage auf Trägern oder Trägerelementen aus geripptem Blech, dadurch gekennzeichnet, daß sie im wesentlichen einerseits aus einem mit den Trägern oder den Trägerelementen verbundenen Basisteil (1), der in Form des Halterungsstückes (1) nach Anspruch 1 vorliegt, und anderseits aus einem oberen Element (13) in Form einer Platte, die mit einem Mittel (14) zur Verbindung mit dem Basisteil (1) und zur Einstellung ihres Abstandes zu den Trägern oder Trägerelementen (6) versehen ist, besteht.

5. Befestigungvorrichtung nach Anspruch 4, dadurch gekennzeichnet, daß das Mittel (14) zum Verbinden und Einstellen die Form einer Gewindestange aufweist, die mit einem Gewindeloch (3), das im oberen Teil des rohrförmigen Körpers (2) des Basisteils (1) angeordnet ist, zusammenarbeiten kann.

6. Befestigungvorrichtung nach einem der Ansprüche 4 und 5, dadurch gekennzeichnet, daß das obere Element (13) eine Form einer vollen Scheibe hat oder konvexe Umfangsabschnitte aufweist, das gegebenenfalls mindestens eine durchgehende Öffnung umfaßt, die die Betätigung des Elementes (13) bei der Anordnung auf dem Halterungsstück (1) erleichtert.

## Claims

1. A fastening for mounting on supports or bearer elements of the type made from ribbed sheet-metal and comprising mainly a tubular member (2) and an anchoring element (4, 5) fitted to one of the ends of the said tubular member (2) and extending perpendicularly thereto, the said anchoring element comprising a rectilinear rod portion (4) and a bent rod portion (5) of L-shape, disposed on either side of said tubular member (2), characterised in that the tubular member (2) is provided with connecting means (3) disposed at its end remote from the anchoring element (4, 5) and in that the anchoring element is secured to the said tubular member (2) before assembly by successive introduction of the rectilinear rod portion (4) and of the bent rod portion (5) into aligned apertures (8, 9) preformed in the side walls (10) defining the slots (7) in the bearer elements (6), in the immediate vicinity of the support surface (11) of the latter.

2. A fastening according to claim 1, characterised in that the connecting means (3) are in the form of an internal or external screwthread, a click-engagement device, or a male or female interlocking element provided with retaining means or the like.

3. A fastening according to claim 1 or 2, characterised in that the anchoring element (4, 5) advantageously has a solid or hollow square section.

4. A device for fixing insulating panels and a sealing covering to supports or bearer elements made of ribbed sheet-metal, characterised in that it mainly comprises, firstly, a base (1) firmly secured to the supports or bearer elements (6), in the form of the fastening (1) according to claim 1, and, secondly, a top element (13) in the form of a plate provided with a means (14) for connection to said base (1) and for adjustment of its distance from the supports or bearer elements (6).

5. A fixing device according to claim 4, characterised in that the connecting and adjusting means (14) is in the form of a screwthreaded rod adapted to co-operate with a tapped aperture (3) formed in the top part of the tubular member (2) of the base (1).

6. A fixing device according to claim 4 or 5, characterised in that the top element (13) has a discoidal shape, which is solid or provided with convex peripheral cut-outs, comprising, where applicable, at least one through aperture facilitating handling of the element (13) when it is fitted to the fastening (1).
